(19) Europäisches Patentamt

European Patent Office

Office européen des brevets

(11) **EP 0 965 792 B1**

(12) **FASCICULE DE BREVET EUROPEEN**

(45) Date de publication et mention
de la délivrance du brevet:
**27.08.2003 Bulletin 2003/35**

(51) Int Cl.[7]: **F23D 14/46**, F23D 11/36,
F23D 14/22

(21) Numéro de dépôt: **99401421.5**

(22) Date de dépôt: **11.06.1999**

(54) **Brûleur à injecteur perfectionné et procédé de fabrication de cet injecteur**

Brenner mit verbesserter Einspritzdüse und Herstellungsverfahren für diese Einspritzdüse

Burner with improved injector and manufacturing process for this injector

(84) Etats contractants désignés:
**DE GB IT SE**

(30) Priorité: **15.06.1998 FR 9807500**

(43) Date de publication de la demande:
**22.12.1999 Bulletin 1999/51**

(73) Titulaire: **L'air Liquide, S.A. à Directoire et Conseil
de Surveillance pour l'Etude et l'Exploitation des
Procédés Georges Claude
75321 Paris Cedex 07 (FR)**

(72) Inventeurs:
• **Bodelin, Pierre
92170 Vanves (FR)**
• **Recourt, Patrick
91460 Marcoussis (FR)**
• **Meyer, Annie
95300 Pontoise (FR)**
• **Guedra, Jean-Paul
95810 Vallangoujard (FR)**

(74) Mandataire: **Vesin, Jacques et al
L'Air Liquide,
Service Propriété Intellectuelle,
75 Quai d'Orsay
75321 Paris Cedex 07 (FR)**

(56) Documents cités:
**EP-A- 0 571 984          EP-A- 0 646 751
WO-A-97/22547          US-A- 4 402 746
US-A- 5 209 772          US-A- 5 490 775**

• **PATENT ABSTRACTS OF JAPAN vol. 098, no.
001, 30 janvier 1998 (1998-01-30) & JP 09 257215
A (DAIDO STEEL CO LTD), 30 septembre 1997
(1997-09-30)**

EP 0 965 792 B1

## Description

L'invention est relative à un brûleur par exemple pour un four dans l'industrie verrière, comprenant un injecteur dont une zone d'extrémité est destinée à être exposée, en fonctionnement du brûleur, à des températures élevées.

Les brûleurs comprennent généralement un injecteur installé dans une paroi d'une chambre de combustion et destiné à injecter un oxydant et/ou un combustible dans celle-ci pour amorcer ou entretenir une combustion. Par conséquent, en fonctionnement du brûleur, l'injecteur est exposé à des forts gradients de température étant donné que l'extrémité de l'injecteur débouchant dans la chambre de combustion est soumise à la température régnant dans la chambre de combustion, c'est-à-dire supérieure à 1000°C, alors que son autre extrémité, du côté alimentation, est à une température proche de la température ambiante.

Afin d'assurer le bon fonctionnement du brûleur et ainsi celui de la chambre de combustion, un tel injecteur doit être inspecté régulièrement, et éventuellement être nettoyé ou remplacé.

On comprend donc que ces injecteurs sont périodiquement soumis à de forts chocs thermiques, et occasionnellement à des chocs mécaniques lors des manipulations.

On connaît des injecteurs réalisés avec des aciers inoxydables dits "réfractaires", possédant une température limite d'utilisation de 1200°C et contenant un fort pourcentage en nickel, voir par example le document EP 646 751.

Bien que ces injecteurs résistent convenablement à la fois aux chocs thermiques et aux chocs mécaniques, ils sont souvent attaqués chimiquement ce qui altère leurs propriétés mécaniques et nécessite leur remplacement.

De plus, il s'est avéré que le nickel présent dans cet acier est un catalyseur de la réaction de cokéfaction sur l'injecteur, c'est-à-dire de la croissance de structures solides composées de carbone graphite et prenant naissance à l'extrémité de l'injecteur. La formation de ces protubérances graphitées conduit fréquemment à des déviations des jets de combustible ou de l'oxydant, et, par voie de conséquence, à des déviations de flamme qui peuvent, à terme, impacter dans l'ouvreau et le fondre.

L'invention vise à pallier ces divers inconvénients en proposant un brûleur comportant un injecteur qui présente de bonnes résistances thermique et mécanique tout en prévenant un risque de cokéfaction de l'extrémité de l'injecteur.

A cet effet, l'invention a pour objet un brûleur comprenant un injecteur dont une zone d'extrémité est susceptible d'être portée à des températures élevées en fonctionnement du brûleur, caractérisé en ce que ladite zone d'extrémité est réalisée en un alliage comprenant entre 16 et 22% environ en poids de Cr, entre 3 et 6 % environ en poids de Al, entre 0,1 et 1,0 % environ en poids de Ti, entre 0,1 et 1,0 % environ en poids de $Y_2O_3$, et entre 70 et 80 % environ en poids de Fe et en ce que ladite zone d'extrémité a subi un traitement thermique à une température supérieure à 800°C dans une atmosphère riche en oxygène.

Le brûleur selon l'invention peut de plus comporter une ou plusieurs des caractéristiques suivantes :

- ledit alliage comprend environ 19 % en poids de Cr, 5,5 % en poids de Al, 0,5 % en poids de Ti, 0,5 % en poids de $Y_2O_3$, et 74,5 % en poids de Fe,

- la longueur de ladite zone d'extrémité, dans la direction d'injection de l'injecteur, correspond à la partie de l'injecteur susceptible d'être portée à une température supérieure à 700°C en fonctionnement du brûleur,

- ladite longueur de ladite zone d'extrémité est comprise entre 30 et 200mm environ,

- ladite zone d'extrémité est formée par une pièce assemblée par vissage avec l'injecteur,

- le traitement thermique est effectué à une température voisine de 1000°C et l'atmosphère contient au moins 21% en moles d'oxygène.

L'invention a en outre pour objet un procédé de fabrication d'un injecteur pour un brûleur, caractérisé en ce qu'il comprend les étapes suivantes :

- on réalise au moins une zone d'extrémité de l'injecteur, susceptible d'être portée à des températures élevées en fonctionnement du brûleur, en un alliage comprenant entre 16 et 22 % environ en poids de Cr, entre 3 et 6 % environ en poids de Al, entre 0,1 et 1,0 % environ en poids de Ti, entre 0,1 et 1,0 % environ en poids de $Y_2O_3$, et entre 70 et 80 % environ en poids de Fe, et

- on soumet ladite zone d'extrémité à un traitement thermique à une température supérieure à 800°C dans une atmosphère riche en oxygène.

Le procédé selon l'invention peut de plus comporter la caractéristique suivante selon laquelle on effectue ledit traitement thermique à une température voisine de 1000°C et en ce que l'atmosphère contient au moins 21% en moles d'oxygène.

D'autres caractéristiques et avantages de l'invention ressortiront de la description suivante, donnée à titre d'exemple, sans caractère limitatif, en regard du dessin annexé représentant schématiquement en coupe partielle un brûleur selon l'invention.

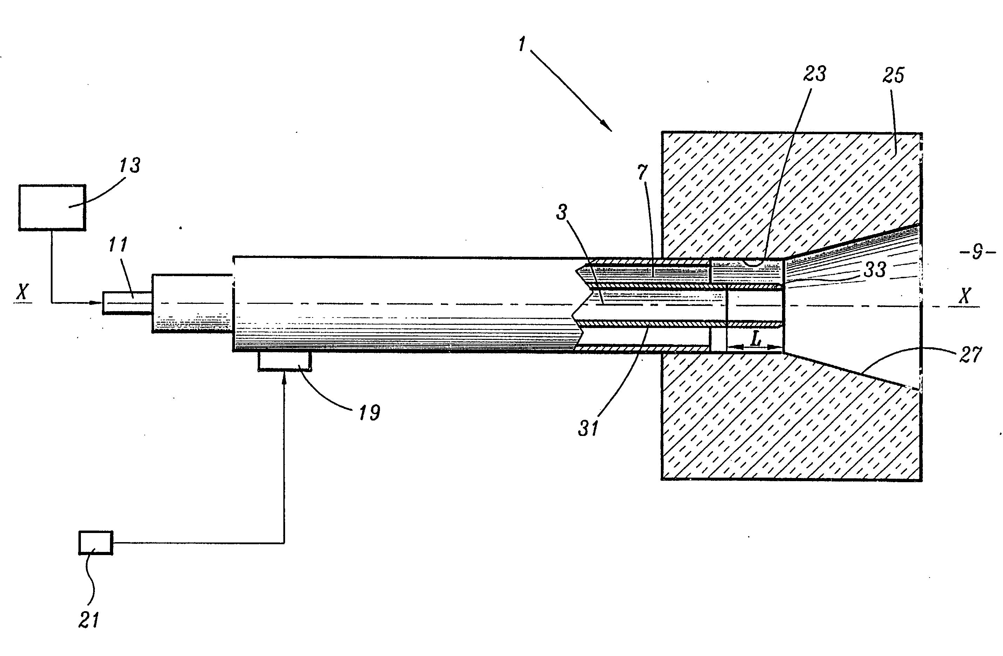

La figure 1 représente un brûleur 1 suivant l'invention. Ce brûleur 1 comprend deux conduits 3 et 7 d'amenée de gaz dans une zone de combustion 9. Ces deux conduits 3 et 7 sont disposés concentriquement autour d'un axe X-X du brûleur 1.

Le conduit 3 est relié par son extrémité 11 d'entrée de gaz à un organe 13 de régulation de débit d'un combustible, tel que par exemple le gaz naturel.

Le conduit annulaire périphérique 7 comporte une entrée 19 d'un comburant. Ce conduit 7 est alimenté par un organe 21 de régulation de débit en comburant tel que par exemple l'oxygène.

Comme on le voit sur la figure, le brûleur 1 est introduit dans un passage 23, appelé ouvreau dans l'industrie verrière, d'un' bloc 25 en matériau réfractaire installé dans la paroi d'un four non représenté. Le passage 23 du bloc 25 débouche dans un passage 27 évasé qui s'ouvre en direction de la zone 9 de combustion.

Comme on le voit sur la figure, les extrémités de sortie du brûleur 1 sont formées d'une part par le passage 23 ménagé dans le bloc 25, et d'autre part par un injecteur 31 formé par exemple par un tube central.

La zone d'extrémité 33 de l'injecteur 31 qui, en fonctionnement du brûleur 1, est susceptible d'être portée à des températures élevées, supérieures à 700°C, est réalisée, en un alliage comprenant entre 16 et 22% en poids de Cr, entre 3 et 6% en poids de Al, entre 0,1 et 1,0% en poids de Ti, entre 0,1 et 1,0% en poids de $Y_2O_3$, et entre 60 et 80% en poids de fer.

De préférence, cet alliage est composé de 19% en Cr, 5,5% en poids de Al, 0,5% en poids de Ti, 0,5% en poids de $Y_2O_3$ et 74,5% en poids de Fe.

Cet alliage est un produit métallique fritté qui possède une température limite d'utilisation élevée, voisine de 1350°C.

De plus, étant donné que cet alliage ne contient pas de nickel, il n'y a pas de risque qu'une réaction de cokéfaction se réalise dans la zone d'extrémité 33 de l'injecteur 31.

De plus cet alliage présente l'avantage de former, à force d'être exposé à des températures élevées supérieures à 800°C, une couche protectrice d'alumine en surface qui minimise les risques de carburation du métal. On notera que cette couche d'alumine n'est pas altérée par des conditions environnantes fortement réductrices. Cette couche d'alumine superficielle est enfin la limite absolue à l'oxydation de cet alliage qui, une fois oxydé en surface, devient insensible à toute attaque oxydante.

Cette couche d'alumine protectrice peut se former soit spontanément durant les premières heures d'utilisation du brûleur, soit, notamment dans les conditions où la zone d'extrémité 33 est exposée à une température inférieure à 800°C et/ou à une atmosphère pauvre en oxygène, la formation de cette couche protectrice est provoquée au préalable par un traitement thermique de cette zone pendant une heure à une température supérieure à 800°C, de préférence à une température voisine de 1000°C et dans une atmosphère riche en oxygène, c'est-à-dire une atmosphère contenant au moins 21% en moles d'oxygène.

Avantageusement, la longueur de ladite zone d'extrémité réalisée dans l'alliage susmentionné est limitée, dans la direction d'injection de l'injecteur 31, à une longueur L correspondant à la partie de l'injecteur

31 susceptible d'être portée à une température supérieure à 700°C en fonctionnement du brûleur 1. De préférence, la longueur L de cette zone d'extrémité 33 est comprise entre 30 et 200mm.

Afin de réduire le coût du brûleur 1, ladite zone d'extrémité 33 est formée par une pièce cylindrique assemblée par exemple par vissage avec le reste de l'injecteur 31 qui dans ses parties exposées à des températures plus faibles est par exemple réalisée en acier réfractaire ou en inox réfractaire. Toutefois, si un assemblage par soudage est nécessaire, on préconise le soudage par laser ou par faisceau d'électrons permettant de diminuer considérablement les risques de rupture de la soudure.

Ainsi, l'injecteur présente une résistance mécanique et thermique élevée tout en prévenant le risque de formation de protubérances par cokéfaction ce qui permet d'espacer les intervalles de maintenance de l'injecteur 3 et de réduire le coût de fonctionnement d'une installation de combustion équipée d'un brûleur selon l'invention.

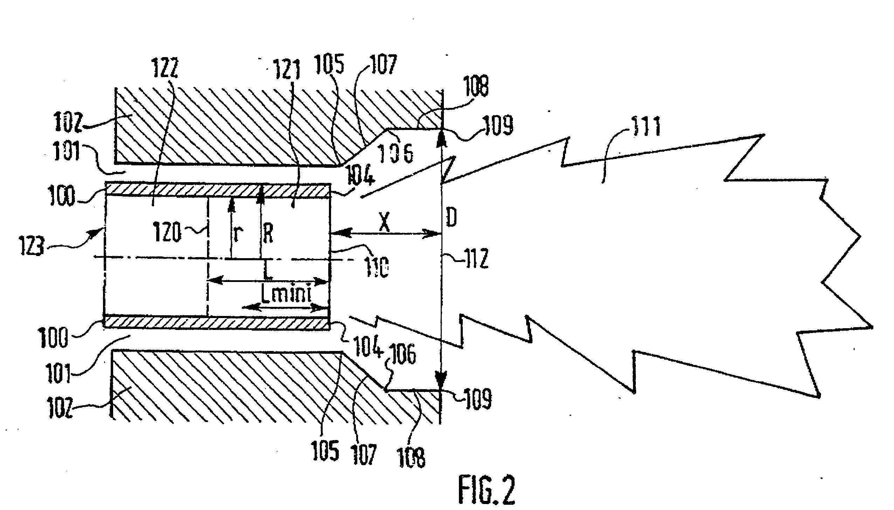

La figure 2 représente une variante de réalisation de la figure 1 explicitant la manière de déterminer la longueur L mini de la zone d'extrémité. L'injecteur central 123 de combustible ou de comburant (air, air enrichi ou oxygène) est constitué d'un conduit 100 substantiellement cylindrique de diamètre interne r (il peut également avoir une forme plus ou moins elliptique) et de diamètre externe R (substantiellement cylindrique mais pas nécessairement) se termine en 104 (côté flamme); la face avant 110 du conduit 100 se trouve à une distance X de la face avant 112 de l'ouvreau 102. La température au niveau de la face 110 est voisine de 1200°C (pour une température de flamme de l'ordre de 2800°C), la température à la jonction 120 de zone d'extrémité 121 et du corps 122 de l'injecteur étant inférieure ou égale à environ 700°C (de préférence).

Autour de l'injecteur 123 circule dans l'espace 101 du combustible (ou du comburant selon qu'on injecte du comburant ou du combustible dans l'injecteur 123), la circulation de ce gaz maintenant une température de l'ordre de 20°C entre l'ouvreau et l'injecteur (dans le canal 101).

Après de nombreuses expérimentations, la demanderesse à mis en évidence que si la distance L entre la face avant 110 de l'injecteur 123 et la jonction 120 entre le corps d'injecteur 122 et la zone d'extrémité 121 restait supérieure ou égale à L mini avec:

$$L_{MINI} = 1900 \ \frac{DR \ln\frac{R}{r}}{4\left(\frac{X}{D}\right)^2 + 1}$$

alors on obtenait dans toutes les configurations correspondantes, une température à la jonction 120 de la zone d'extrémité 121 et du corps de l'injecteur 122; inférieure ou égale à environ 700°C.

Bien entendu, le brûleur décrit ci-dessus n'est qu'un exemple de réalisation pour illustrer et expliquer l'invention.

Ainsi, on peut prévoir des brûleurs ayant des injecteurs de structures différentes, entendu que par "injecteur", on comprend non seulement un tube central d'injection mais tout organe du brûleur destiné à introduire un fluide, comburant ou combustible, dans la zone de combustion du four.

Il importe pour la présente invention que seules la ou les zones d'extrémités de l'injecteur du brûleur susceptibles d'être portées à des températures élevées, notamment supérieures à 700 °C, c'est-à-dire en particulier les couches superficielles, doivent être réalisées avec l'alliage dont la composition a été décrite en détail ci-dessus, pour empêcher une réaction de cokéfaction.

## Revendications

1. Brûleur comprenant un injecteur (31,123), composé d'une zone d'extrémité (33,121) et d'un corps d'injecteur (122), la zone d'extrémité (33, 121) étant susceptible d'être portée à des températures élevées en fonctionnement du brûleur, **caractérisé en ce que** ladite zone d'extrémité (33, 121) est réalisée en un alliage comprenant entre 16 et 22 % environ en poids de Cr, entre 3 et 6 % environ en poids de Al, entre 0,1 et 1,0 % environ en poids de Ti, entre 0,1 et 1,0 % environ en poids de $Y_2O_3$, et entre 70 et 80 % environ en poids de Fe, et **en ce que** ladite zone d'extrémité (33) a subi un traitement thermique à une température supérieure à 800°C dans une atmosphère riche en oxygène.

2. Brûleur selon la revendication 1, **caractérisé en ce que** ledit alliage comprend environ 19 % en poids de Cr, 5,5 % en poids de Al, 0,5 % en poids de Ti, 0,5 % en poids de $Y_2O_3$, et 74,5 % en poids de Fe.

3. Brûleur selon la revendication 1 ou 2, **caractérisé en ce que** la longueur de ladite zone d'extrémité (33); dans la direction d'injection de l'injecteur (31), correspond à la partie de l'injecteur (31) susceptible d'être portée à une température supérieure à 700°C en fonctionnement du brûleur.

4. Brûleur selon la revendication 3, **caractérisé en ce que** ladite longueur de ladite zone d'extrémité (33) est comprise entre 30 et 200mm environ.

5. Brûleur selon l'une quelconque des revendications 1 à 4, **caractérisé en ce que** ladite zone d'extrémité (33) est formée par une pièce assemblée par vissage avec l'injecteur (31).

6. Brûleur selon l'une des revendication 1 à 5, **carac-** **térisé en ce que** le traitement thermique est effectué à une température voisine de 1000°C et **en ce que** l'atmosphère contient au moins 21% en moles d'oxygène.

7. Brûleur selon l'une des revendications 1 à 6, **caractérisé en ce que** la zone d'extrémité est recouverte d'une couche d'aluminium.

8. Brûleur selon l'une des revendications 1 à 7, **caractérisé en ce que** la distance L entre la face avant de la zone d'extrémité (33,121) et la jonction (120) de la zone d'extrémité (33, 121) et du corps d'injecteur (122) est supérieure ou égale à une valeur L mini avec

$$L_{MINI} = 1900 \; \frac{DR \ln \frac{R}{r}}{4\left(\frac{X}{D}\right)^2 + 1}$$

où

D est le diamètre de l'ouvreau à son extrémité,
R est le diamètre externe de l'injecteur,
r est le diamètre interne de l'injecteur,
X est la distance entre la face avant de l'injecteur et l'extrémité de l'ouvreau.

9. Procédé de fabrication d'un injecteur (31) pour un brûleur selon l'une quelconque des revendications 1 à 9, **caractérisé en ce qu'**il comprend les étapes suivantes :

   - on réalise au moins une zone d'extrémité (33) de l'injecteur, susceptible d'être portée à des températures élevées en fonctionnement du brûleur, en un alliage comprenant entre 16 et 22 % environ en poids de Cr, entre 3 et 6 % environ en poids de Al, entre 0,1 et 1,0 % environ en poids de Ti, entre 0,1 et 1,0 % environ en poids de $Y_2O_3$, et entre 70 et 80 % environ en poids de Fe, et

   - on soumet ladite zone d'extrémité (33) à un traitement thermique à une température supérieure à 800°C dans une atmosphère riche en oxygène.

10. Procédé selon la revendication 9, **caractérisé en ce que** l'on effectue ledit traitement thermique à une température voisine de 1000°C et **en ce que** l'atmosphère contient au moins 21% en moles d'oxygène.

## Patentansprüche

1. Brenner mit einer Einspritzdüse (31, 123), die aus einem Endbereich (33, 121) und einem Einspritzkörper (122) besteht, wobei der Endbereich (33, 121) beim Betrieb des Brenners auf höhere Temperaturen gebracht werden kann, **dadurch gekennzeichnet, dass** der Endbereich (33, 121) aus einer Legierung hergestellt ist, die zwischen ungefähr 16 und 22 Gewichtsprozent Cr, zwischen ungefähr 3 und 6 Gewichtsprozent Al, zwischen ungefähr 0,1 und 1,0 Gewichtsprozent Ti, zwischen ungefähr 0,1 und 1,0 Gewichtsprozent $Y_2O_3$ und zwischen ungefähr 70 und 80 Gewichtsprozent Fe umfasst, und dass der Endbereich (33) einer Wärmebehandlung bei einer Temperatur größer als 800°C in einer sauerstoffreichen Atmosphäre unterzogen wurde.

2. Brenner nach Anspruch 1, **dadurch gekennzeichnet, dass** die Legierung ungefähr 19 Gewichtsprozent Cr, 5,5 Gewichtsprozent Al, 0,5 Gewichtsprozent Ti, 0,5 Gewichtsprozent $Y_2O_3$ und 74,5 Gewichtsprozent Fe enthält.

3. Brenner nach Anspruch 1 oder 2, **dadurch gekennzeichnet, dass** die Länge des Endbereichs (33) in der Einspritzrichtung der Einspritzdüse (31) dem Teil der Einspritzdüse (31) entspricht, der beim Betrieb des Brenners auf eine Temperatur größer als 700°C gebracht werden kann.

4. Brenner nach Anspruch 3, **dadurch gekennzeichnet, dass** die Länge des Endbereichs (33) zwischen ungefähr 30 und 200 mm beträgt.

5. Brenner nach einem der Ansprüche 1 bis 4, **dadurch gekennzeichnet, dass** der Endbereich (33) von einem Stück gebildet wird, das durch Verschraubung mit der Einspritzdüse (31) zusammengefügt wird.

6. Brenner nach einem der Ansprüche 1 bis 5, **dadurch gekennzeichnet, dass** die Wärmebehandlung bei einer Temperatur nahe 1000°C ausgeführt wird und dass die Atmosphäre zumindest 21 Molprozent Sauerstoff enthält.

7. Brenner nach einem der Ansprüche 1 bis 6, **dadurch gekennzeichnet, dass** der Endbereich von einer Aluminiumschicht bedeckt ist.

8. Brenner nach einem der Ansprüche 1 bis 7, **dadurch gekennzeichnet, dass** der Abstand L zwischen der Frontseite des Endbereichs (33, 121) und der Verbindung (120) zwischen dem Endbereich (33, 121) und dem Einspritzdüsenkörper (122) größer oder gleich einem Wert $L_{MINI}$ ist mit

$$L_{MINI} = 1900 \frac{DR\ln\frac{R}{r}}{4\left(\frac{X}{D}\right)^2 + 1}$$

wobei

D der Durchmesser der Brennermündung an ihrem Ende ist,
R der Außendurchmesser der Einspritzdüse ist,
r der Innendurchmesser der Einspritzdüse ist,
X der Abstand zwischen der Frontseite der Einspritzdüse und dem Ende der Brennermündung ist.

9. Verfahren zur Herstellung einer Einspritzdüse (31) für einen Brenner nach einem der Ansprüche 1 bis 9, **dadurch gekennzeichnet, dass** es folgende Schritte umfasst:

- dass zumindest ein Endbereich (33) der Einspritzdüse, der beim Betrieb des Brenners auf höhere Temperaturen gebracht werden kann, aus einer Legierung hergestellt wird, die zwischen ungefähr 16 und 22 Gewichtsprozent Cr, zwischen ungefähr 3 und 6 Gewichtsprozent Al, zwischen ungefähr 0,1 und 1,0 Gewichtsprozent Ti, zwischen ungefähr 0,1 und 1,0 Gewichtsprozent $Y_2O_3$ und zwischen ungefähr 70 und 80 Gewichtsprozent Fe umfasst, und

- dass der Endbereich (33) einer Wärmebehandlung bei einer Temperatur größer als 800°C in einer sauerstoffreichen Atmosphäre unterzogen wird.

10. Verfahren nach Anspruch 9, **dadurch gekennzeichnet, dass** die Wärmebehandlung bei einer Temperatur nahe 1000°C ausgeführt wird und dass die Atmosphäre zumindest 21 Molprozent Sauerstoff enthält.

**Claims**

1. Burner comprising an injector (31, 123) composed of an end zone (33, 121) and of an injector body (122), the end zone (33, 121) being able to be taken to high temperatures during operation of the burner, **characterized in that** the said end zone (33, 121) is made of an alloy comprising between approximately 16 and 22% by weight of Cr, between approximately 3 and 6% by weight of Al, between approximately 0.1 and 1.0% by weight of Ti, between approximately 0.1 and 1.0% by weight of $Y_2O_3$ and between approximately 70 and 80% by weight of Fe, and **in that** the said end zone (33) has undergone a heat treatment at a temperature of greater than 800°C in an oxygen-rich atmosphere.

**2.** Burner according to Claim 1, **characterized in that** the said alloy comprises approximately 19% by weight of Cr, 5.5% by weight of Al, 0.5% by weight of Ti, 0.5% by weight of $Y_2O_3$ and 74.5% by weight of Fe.

**3.** Burner according to Claim 1 or 2, **characterized in that** the length of the said end zone (33), in the injection direction of the injector (31), corresponds to that part of the injector (31) which can be taken to a temperature of greater than 700°C during operation of the burner.

**4.** Burner according to Claim 3, **characterized in that** the said length of the said end zone (33) is between approximately 30 and 200 mm.

**5.** Burner according to any one of Claims 1 to 4, **characterized in that** the said end zone (33) is formed by a piece joined to the injector (31) by screwing.

**6.** Burner according to one of Claims 1 to 5, **characterized in that** the heat treatment is carried out at a temperature of around 1000°C and **in that** the atmosphere contains at least 21 mol% oxygen.

**7.** Burner according to one of Claims 1 to 6, **characterized in that** the end zone is covered with an aluminium layer.

**8.** Burner according to one of Claims 1 to 7, **characterized in that** the distance L between the front face of the end zone (33, 121) and the junction (120) of the end zone (33, 121) with the injector body (122) is greater than or equal to a value $L_{min}$ given by:

$$L_{min} = 1900 \frac{DR \ln \frac{R}{r}}{4\left(\frac{X}{D}\right)^2 + 1}$$

where:

D is the diameter of the equarl at its end;
R is the outside diameter of the injector;
r is the inside diameter of the injector; and
X is the distance between the front face of the injector and the end of the quarl.

**9.** Process for manufacturing an injector (31) for a burner according to any one of Claims 1 to 9, **characterized in that** it comprises the following steps:

- at least one end zone (33) of the injector, which can be taken to high temperatures during operation of the burner, is made of an alloy comprising between approximately 16 and 22% by weight of Cr, between approximately 3 and 6% by weight Al, between approximately 0.1 and 1.0% by weight of Ti, between approximately 0.1 and 1.0% by weight of $Y_2O_3$ and between approximately 70 and 80% by weight of Fe; and

- the said end zone (33) is subjected to a heat treatment at a temperature of greater than 800°C in an oxygen-rich atmosphere.

**10.** Process according to Claim 9, **characterized in that** the said heat treatment is carried out at a temperature of around 1000°C and **in that** the atmosphere contains at least 21 mol% of oxygen.

FIG.2